(19) Europäisches Patentamt
European Patent Office
Office européen des brevets

(11) **EP 2 708 934 B1**

(12) **EUROPEAN PATENT SPECIFICATION**

(45) Date of publication and mention
of the grant of the patent:
**30.08.2017   Bulletin 2017/35**

(51) Int Cl.:
***G02B 21/00*** *(2006.01)*      ***G01B 9/04*** *(2006.01)*
***G01B 11/24*** *(2006.01)*

(21) Application number: **13174666.1**

(22) Date of filing: **02.07.2013**

(54) **Chromatic confocal measurement apparatus**

Chromatisch-konfokale Messvorrichtung

Appareil de mesure confocal chromatique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2012   JP 2012202343**

(43) Date of publication of application:
**19.03.2014   Bulletin 2014/12**

(73) Proprietor: **OMRON CORPORATION
Kyoto-shi, Kyoto 600-8530 (JP)**

(72) Inventors:
• **Matsui, Yuki
  Kyoto Kyoto 600-8530 (JP)**
• **Fujiwara, Naoki
  Kyoto Kyoto 600-8530 (JP)**
• **Suga, Takahiro
  Kyoto Kyoto 600-8530 (JP)**

(74) Representative: **Horn Kleimann Waitzhofer
Patentanwälte PartG mbB
Ganghoferstrasse 29a
80339 München (DE)**

(56) References cited:
**EP-A1- 2 388 635      DE-A1- 10 321 885**

• **W. LYDA, D. FLEISCHLE, T. HAIST, W. OSTEN:
SPIE, PO BOX 10 BELLINGHAM WA 98227-0010
USA, vol. 7432, 1 January 2009 (2009-01-01),
XP040500964,**

**Description**

TECHNICAL FIELD

The present invention relates to a confocal measurement apparatus that measures a displacement of a measurement target using a confocal optical system.

RELATED ART

In a measurement apparatus that measures a displacement of a measurement target in a non-contact manner, for example, U.S. Patent No. 5785651 (Patent Document 1) discloses the confocal measurement apparatus that measures the displacement of the measurement target using the confocal optical system.

Using a diffractive lens, the confocal measurement apparatus disclosed in Patent Document 1 generates a chromatic aberration along an optical axis in light emitted from a light source. In the confocal measurement apparatus disclosed in Patent Document 1, optical fibers are used in an optical path from the light source to a collimator lens and an optical path from the collimator lens to a spectroscope.

PRIOR ART DOCUMENTS

PATENT DOCUMENTS

[Patent Document 1] U.S. Patent No. 5785651

DE 103 21 885 A1 describes a confocal arrangement with a variable refractive power component and a test objective.

W. Lyda, D. Fleischle, T. Haist, W. Osten: Chromatic Confocal Spectral Interferometry for Technical Surface Characterization, Proc. of SPIE Vol. 7432 describes a chromatic confocal spectral interferometer which is based on chromatic confocal microscopy with a chromatic dispersion leading to a wavelength depending position of foci in object space.

EP 2 388 635 A1 describes a central ray blocking aperture element which is utilized in a chromatic confocal point sensor optical pen for chromatic range sensing.

OVERVIEW OF THE INVENTION

PROBLEMS TO BE SOLVED BY THE INVENTION

For example, an apparatus that measures the displacement is used to inspect a product. Possibly, for example, a shape and a material vary according to the product. The displacement measurement apparatus is required to exert high measurement performance irrespective of the factors such as the shape and the material.

The present invention has been devised to solve the problems described above, and an object thereof is to provide a confocal measurement apparatus which can achieve high measurement accuracy.

MEANS FOR SOLVING THE PROBLEMS

In accordance with one aspect of the present invention, a confocal measurement apparatus that measures a displacement of a measurement target using a confocal optical system, the confocal measurement apparatus includes: a light source that emits light having a plurality of wavelengths; a diffractive lens that includes a diffraction surface and a plane to generate a chromatic aberration along an optical axis direction in the light emitted from the light source, a diffraction pattern being formed in the diffraction surface in order to generate the chromatic aberration, the plane being located on an opposite side to the diffraction surface; an objective lens that is disposed on a measurement target side with respect to the diffractive lens to collect the light, in which the chromatic aberration is generated by the diffractive lens, on the measurement target; a pin hole that allows passage of that part of the light collected by the objective lens that is in focus on the measurement target (i.e. the light that is focused on the measurement target in the light collected by the objective lens); and a measurement part that measures an intensity of the light passing through the pin hole in each wavelength, wherein the diffractive lens includes a dimming part having an axis-symmetrical shape about an optical axis of the diffractive lens, wherein the plane of the diffractive lens in which the dimming part is formed is oriented toward the pin hole, and the diffraction surface of the diffractive lens is oriented toward the objective lens. In the configuration, "dimming" includes not only weakening of the light but also shielding of the light (light shielding).

Preferably the dimming part includes a light shielding film that is formed in the plane of the diffractive lens.

Preferably the dimming part is constructed by a paint fixed to the plane of the diffractive lens. Preferably the dimming part is constructed by a metallic film fixed to the plane of the diffractive lens.

Preferably the ring-like diffraction pattern is provided in the diffraction surface, and the dimming part is a plane that is surrounded by the diffraction pattern and disposed in a center of the diffraction surface.

Preferably an area of the dimming part falls within a range of 10% to 50% of an effective area of the diffractive lens.

EFFECT OF THE INVENTION

According to the present invention, the measurement accuracy of the confocal measurement apparatus can be enhanced.

BRIEF DESCRIPTION OF THE DRAWINGS

Fig. 1 is a schematic diagram illustrating a configuration of a confocal measurement apparatus according to a first embodiment of the present invention;

Fig. 2 is a view illustrating an example of a spectral waveform of a displacement of a measurement target measured with a confocal measurement apparatus of the first embodiment;

Fig. 3 is a plan view illustrating an example of a shape of a light shielding film in Fig. 1;

Fig. 4 is a view illustrating a characteristic of a diffractive lens 1;

Fig. 5 is a graph illustrating a spherical aberration generated in the diffractive lens;

Fig. 6 is a view illustrating an example of an aberration generated in a configuration in which the diffractive lens and an objective lens are combined;

Fig. 7 shows views illustrating a problematic point in measuring the displacement of a configuration in which light shielding is not performed in a central portion of a lens;

Fig. 8 shows views illustrating measurement of the displacement in the configuration of the first embodiment;

Fig. 9 shows views illustrating improvement of measurement accuracy by shielding (central shielding) in a central portion of the diffractive lens;

Fig. 10 is a schematic diagram illustrating another not claimed configuration of the confocal measurement apparatus with a central light shielding;

Figs. 11 shows views illustrating comparison of the case that a plane of the diffractive lens is oriented toward the objective lens and the case that the plane is oriented toward a pin hole (optical fiber);

Fig. 12 is a schematic diagram illustrating still another not claimed configuration of the confocal measurement apparatus;

Fig. 13 is a view schematically illustrating a diffraction surface of the diffractive lens in Fig. 12;

Fig. 14 is a schematic sectional view of the diffractive lens 1 in Fig. 12;

Fig. 15 is a schematic diagram illustrating a not claimed configuration of a confocal measurement apparatus;

Fig. 16 is a view illustrating an example of a measurement target measured with the confocal measurement apparatus;

Fig. 17 is a waveform chart illustrating a light reception waveform when a transparent body layer in Fig. 16 is measured;

Fig. 18 is a view illustrating a method for measuring a thickness of the transparent body layer in Fig. 17;

Fig. 19 is a view illustrating a relationship between an original height and a measured height;

Fig. 20 is a flowchart illustrating measurement processing performed by the confocal measurement apparatus and

Fig. 21 is a view illustrating another not claimed configuration of the confocal measurement apparatus.

EMBODIMENTS OF THE INVENTION

Hereinafter, embodiments of the present invention will be described with reference to the drawings. In the drawings, the identical or equivalent component is designated by the identical numeral, and the overlapping description is omitted.

In the embodiments, unless otherwise distinguished, the term "dimming" means not only weakening of light but also shielding of light (light shielding).

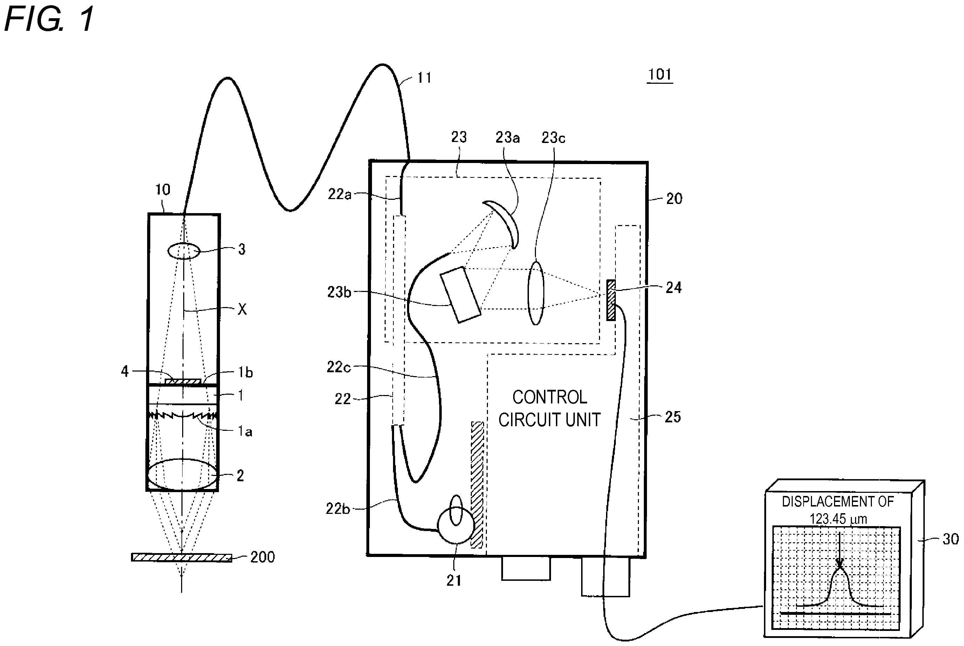

Fig. 1 is a schematic diagram illustrating a configuration of a confocal measurement apparatus according to a first embodiment of the present invention. A confocal measurement apparatus 101 in Fig. 1 is a measurement apparatus that measures a displacement of a measurement target 200 using a confocal optical system. There is no particular limitation to the measurement target 200. In other words, the confocal measurement apparatus 101 is not restricted to a specific application.

The confocal measurement apparatus 101 includes a head part 10, an optical fiber 11, a controller 20, and a monitor 30. The head part 10 includes a confocal optical system. The head part 10 and the controller 20 are optically connected to each other by the optical fiber 11. The monitor 30 displays a signal output from the controller 20.

The head part 10 includes a diffractive lens 1, an objective lens 2, and a collective lens 3. The objective lens 2 is disposed on the side of the measurement target 200 with respect to the diffractive lens 1. A focal distance of the diffractive lens 1 is larger than a difference between a distance from the diffractive lens 1 to the objective lens 2 and a focal distance of the objective lens 2.

The diffractive lens 1 is an optical element that generates a chromatic aberration along an optical axis direction in the light emitted from a light source (for example, a white light source). The light source emits light having plural wavelengths as described below. An optical axis X indicates an optical axis of the diffractive lens 1. The optical axis X of the diffractive lens 1 is aligned with the optical axis of the light output from the optical fiber 11 and the optical axis of the objective lens 2.

In one of surfaces of the diffractive lens 1, a fine undulation such as a kinoform shape and a binary shape (stepwise shape) is periodically formed, or an amplitude type zone plate that periodically changes a light transmittance is formed. The surface is referred to as a diffraction surface 1 a of the diffractive lens 1. In the first embodiment, the diffraction surface 1a of the diffractive lens 1 is oriented toward the objective lens 2.

On the other hand, the surface of the diffractive lens 1 on the opposite side to the diffraction surface 1 a is a plane. The plane is referred to as a plane 1 b. A light shielding film 4 is formed in a central portion of the plane 1 b, through which the optical axis X (center optical axis) of the diffractive lens 1 passes.

The light shielding film 4 shields the light that is output from the optical fiber 11 to reach the central portion of the plane 1 b. The light output from the optical fiber 11 passes through a region (referred to as an outer circumference portion) around the light shielding film 4 on the plane 1 b, and the chromatic aberration is generated by the diffraction surface 1 a of the diffractive lens 1.

For example, the diffractive lens 1 may have a configuration in which a pattern generating the chromatic aberration along the optical axis direction is formed on a substrate made of a single material such as glass and resin. Alternatively, for example, the diffractive lens 1 may be constructed by a glass substrate layer or a resin layer. An ultraviolet curing resin is applied to the glass substrate, a die of the desired pattern is impressed on the surface of the glass substrate on which the ultraviolet curing resin is applied, and the ultraviolet curing resin is cured by irradiating the ultraviolet curing resin with an ultraviolet ray, which allows the resin layer to be formed. According to the method, production cost is reduced. Additionally, a temperature characteristic is advantageously improved because a most part of the diffractive lens 1 is constructed by the glass substrate in which the shape is hardly changed by an environmental temperature.

The objective lens 2 is an optical element that collects the light, in which the chromatic aberration is generated by the diffractive lens 1, to the measurement target 200. The objective lens 2 collimates the light reflected from the measurement target 200 into parallel light. The collimated light is incident to the diffractive lens 1.

In the light output from the optical fiber 11, the light reaching the central portion of the diffractive lens 1 does not pass through the diffractive lens 1 due to the light shielding film 4. Accordingly, the light passing through the outer circumference portions of the diffractive lens 1 and the objective lens 2 reaches the measurement target 200. The light reflected from the measurement target 200 is incident to the optical fiber 11 through the outer circumference portions of the diffractive lens 1 and the objective lens 2. The light shielding film 4 corresponds to the dimming part that reduces an amount of light incident to the optical fiber 11 (pin hole) through the central portion of the diffractive lens 1 (in the first embodiment, substantially reduces the light amount to zero).

The light emitted from the white light source is guided to the head part 10 through the optical fiber 11. In order to effectively use the light output from the optical fiber 11 in the diffractive lens 1, it is necessary to match a numerical aperture (NA) of the optical fiber 11 with a numerical aperture of the diffractive lens 1. Therefore, the collective lens 3 is provided between the optical fiber 11 and the diffractive lens 1, and the light is adjusted such that the numerical aperture of the optical fiber 11 is matched with the numerical aperture of the diffractive lens 1.

The optical fiber 11 acts as not only an optical path from the head part 10 to the controller 20 but also the pin hole. That is, in the light collected by the objective lens 2, the light focused on the measurement target 200 is focused in an aperture of the optical fiber 11. Therefore, the optical fiber 11 acts as the pin hole, which shields the light having the wavelength not focused on the measurement target 200 while allowing the passage of the light focused on the measurement target 200. The use of the optical fiber 11 as the optical path from the head part 10 to the controller 20 eliminates necessity of the pin hole.

The confocal measurement apparatus 101 may have a configuration in which the optical fiber 11 is not used as the optical path from the head part 10 to the controller 20. However, the use of the optical fiber 11 as the optical path can flexibly move the head part 10 with respect to the controller 20. In the case that the optical fiber 11 is not used as the optical path from the head part 10 to the controller 20, it is necessary that the confocal measurement apparatus 101 includes the pin hole. On the other hand, when the optical fiber 11 is used, it is not necessary that the confocal measurement apparatus 101 includes the pin hole.

The controller 20 includes a white LED (Light Emitting Diode) 21 that is of the white light source, a branching optical fiber 22, a spectroscope 23, an imaging element 24, and a control circuit unit 25. Although the white LED 21 is used as the white light source, another light source may be used as long as the light source can emit the white light.

The branching optical fiber 22 includes one optical fiber 22a on the side connected to the optical fiber 11 and two optical fibers 22b and 22c on the opposite side. The optical fiber 22b is optically connected to the white LED 21, and the optical fiber 22c is optically connected to the spectroscope 23. Therefore, the branching optical fiber 22 can guide the light emitted from the white LED 21 to the optical fiber 11, and guide the light returning from the head part 10 through the optical fiber 11 to the spectroscope 23.

The spectroscope 23 includes a concave mirror 23a that reflects the light returning from the head part 10, a diffraction grating 23b to which the light reflected from the concave mirror 23a is incident, and a collective lens 23c that collects the light output from the diffraction grating 23b. The spectroscope 23 may have any configuration such as a Czerny-Turner type and Littrow type as long as a focusing position of the light returning from the head part 10 in the imaging element 24 can be changed by the wavelength.

The imaging element 24 measures an intensity of the light output from the spectroscope 23. For example, the imaging element 24 is a line CMOS (Complementary Metal Oxide Semiconductor) or a line CCD (Charge Coupled Device). In the confocal measurement apparatus 101, the spectroscope 23 and the imaging element 24 constitute the measurement part that measures the intensity of the light returning from the head part 10 in each wavelength and specifies the wavelength of the focused light from a peak value of the intensity. The displacement of the measurement target 200 can be measured by previously obtaining a relationship between the wavelength of the focused light and the displacement of the measurement target 200. The measurement part may be constructed by a single body of the imaging element 24 such as the CCD when the intensity of the light returning from the head part 10 can be measured in each wavelength. The imaging element 24 may be a two-dimensional CMOS or a two-dimensional CCD.

The control circuit unit 25 controls operations of the white LED 21 and the imaging element 24. Although not illustrated, the control circuit unit 25 includes an input interface to which a signal is input in order to adjust the operations of the white LED 21 and the imaging element 24 and an output interface from which the signal of the imaging element 24 is output.

The monitor 30 displays the signal output from the imaging element 24. For example, the monitor 30 draws a spectral waveform of the light returning from the head part 10, and displays the displacement of the measurement target, for example, 123.45 $\mu$m.

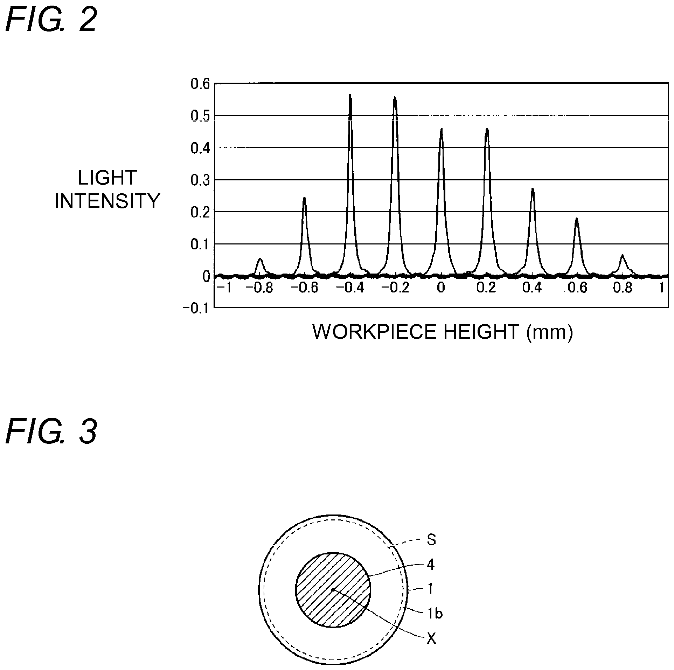

Fig. 2 is a view illustrating an example of the spectral waveform of the displacement of the measurement target measured with the confocal measurement apparatus 101 of the first embodiment. In the spectral waveform in Fig. 2, a horizontal axis indicates a workpiece height (a height from the measurement target 200 to a leading end of the head part 10 is set to zero) (mm) corresponding to the wavelength of the light, and a vertical axis indicates the light intensity (normalized value). Plural peaks of spectra are illustrated in the spectral waveform, and a half-value width of the spectrum in which the workpiece height is located on a negative side (a side on which the light wavelength is shorter) is substantially equal to a half-value width of the spectrum in which the workpiece height is located on a positive side (a side on which the light wavelength is longer). Accordingly, in the confocal measurement apparatus 101, a variation of the accuracy of measuring the displacement of the measurement target 200 due to the light wavelength is prevented because the half-value width of the spectrum changes hardly even if the workpiece height (light wavelength) changes.

Fig. 3 is a plan view illustrating an example of the shape of the light shielding film 4 in Fig. 1. Referring to Fig. 3, in the central portion of the plane 1 b of the diffractive lens 1, a light shielding region is formed by the light shielding film 4. The light shielding region has an axisymmetrical shape, more particularly a circular shape. The center of the circle is matched with the optical axis X.

In Fig. 3, an area of a region S surrounded by a broken line indicates an effective area of the diffractive lens 1. Here, the region S indicates not a region where the diffraction pattern is formed but a region through which the effective light for measurement passes. The area of the light shielding region is determined such that a light reception amount, namely, an amount of light returning from the measurement target 200 to the controller 20 through the head part 10 and a good angle characteristic can be ensured. In the first embodiment, a ratio of the area of the light shielding region to the effective area of the diffractive lens 1 is determined so as to become a range of 10% to 50%, preferably a range of 20% to 40%, and more preferably 30%. As used herein, the "angle characteristic" means a characteristic by which the displacement of an angled portion (inclined portion) of the measurement target 200 can accurately be measured.

As can be seen from Figs. 1 and 3, the light shielding region formed in the plane 1b of the diffractive lens 1 by the light shielding film 4 has the axisymmetrical shape about the optical axis X. The axisymmetrical angle characteristic about the optical axis X can be obtained by forming the light shielding region into the axisymmetrical shape.

The necessity to add a light shielding component is eliminated by forming the light shielding film 4 on the surface (plane 1 b) of the diffractive lens 1. There is no particular limitation to a material for the light shielding film 4, but any film that is fixed onto the surface of the diffractive lens 1 may be used as the light shielding film. The surface on the opposite side to the diffraction surface of the diffractive lens 1 is the plane, so that the light shielding film can easily be formed on the plane. A light shielding film forming method is determined according to the material for the light shielding film.

For example, a black paint may be applied to the central portion of the plane 1 b of the diffractive lens 1 by a printing technology. The light shielding film 4 can easily be formed by the printing technology. The use of the black paint can prevent the reflection of the light incident to the light shielding region.

Alternatively, a metallic film may be used as the light shielding film 4. Examples of the metallic film include, but not limited to, a Cr (chromium) film, a chromium oxide film, and an Al (aluminum) film. Well-known methods such as evaporation and sputtering may be used in order to fix the metallic film to the plane 1 b of the diffractive lens 1. The use of the metallic film as the light shielding film 4 can enhance stability of the light shielding film 4. For example, the light shielding film 4 is hardly peeled from the plane 1 b of the diffractive lens 1.

The light shielding film 4 may be a single-layer film or a multi-layer film. In the case that the light shielding film 4 is constructed by the multi-layer film, there is no particular limitation to the configuration and the material of the multi-layer film.

As described above, in the configuration in Fig. 1, the diffractive lens 1 is used to generate the axial chromatic aberration in the light emitted from the light source. According to the configuration of the first embodiment, the number of lenses can largely be decreased compared with the case that a refractive lens is used. Therefore, the compact, light-weight, robust head part can be constructed.

However, the diffractive lens has a characteristic in which a spherical aberration is generated at the wavelength except a design wavelength while the spherical aberration is not generated at the design wavelength.

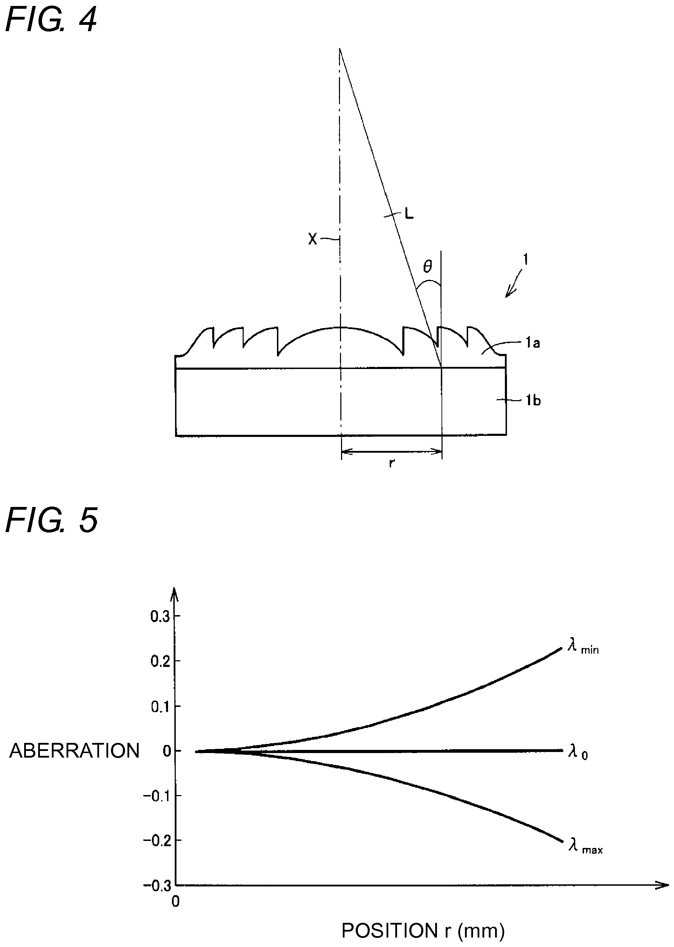

Fig. 4 is a view illustrating the characteristic of the diffractive lens 1. Referring to Fig. 4, it is assumed that $\lambda_0$ is the design wavelength of the diffractive lens 1, and that $f_0$ is a focal distance of the diffractive lens 1 for the light having the wavelength $\lambda_0$. It is also assumed that r is a distance between a ray L passing through the diffractive lens 1 and the optical axis X of the diffractive lens 1. Assuming that $\theta$ is a diffraction angle of the ray L passing through the diffractive lens 1, the following equation (1) holds.

[Mathematical formula 1]

$$\tan \theta = \frac{r}{f_0} \qquad \cdots (1)$$

It is assumed that d(r) is a pitch of the diffraction pattern of the diffractive lens 1. A relationship between the diffraction angle $\theta$ of first-order diffraction light and the pattern pitch d(r) is expressed by a general diffraction equation (2).

[Mathematical formula 2]

$$d(r)\sin \theta = \lambda_0 \qquad \cdots (2)$$

Accordingly, the pattern pitch d(r) is expressed by the following equation (3).

[Mathematical formula 3]

$$d(r) = \frac{\lambda_0}{r}\sqrt{f_0^2 + r^2} \qquad \cdots (3)$$

As described above, the diffraction pattern of the diffractive lens 1 is designed according to a specific wavelength $\lambda_0$. Accordingly, the spherical aberration is generated in the case that the light having the wavelength different from the wavelength $\lambda_0$ is incident to the diffractive lens 1.

Fig. 5 is a graph illustrating the spherical aberration generated in the diffractive lens. Referring to Fig. 5, because the pitch d(r) is designed according to the design wavelength $\lambda_0$, the aberration is zero at the wavelength $\lambda_0$ irrespective of the position (r). Here, it is assumed that $\lambda_{min}$ and $\lambda_{max}$ are a minimum wavelength and a maximum wavelength respectively in a wavelength range including the wavelength $\lambda_0$. For example, the wavelength range corresponds to a wavelength range of the light emitted from the white light source. The spherical aberration is generated in the case that the light having the wavelength $\lambda_{min}$ is incident to the diffractive lens 1, or in the case that the light having the wavelength $\lambda_{max}$ is incident to the diffractive lens 1.

The spherical aberration generated by the diffractive lens can be reduced to some extent by the objective lens 2. However, it is difficult to completely eliminate the spherical aberration. Accordingly, in the case that the light having the wavelength different from the design wavelength passes through the diffractive lens 1, the light passing through the portion relatively close to the optical axis X of the diffractive lens 1 differs from the light passing through the portion relatively far way from the optical axis X in the focal distance.

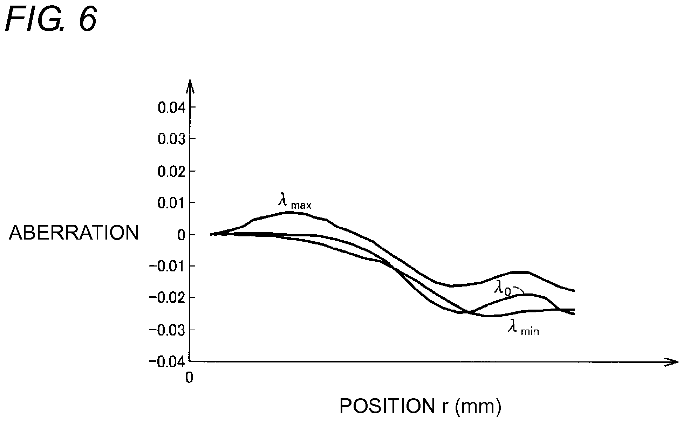

Fig. 6 is a view illustrating an example of the aberration generated in a configuration in which the diffractive lens and the objective lens are combined. Referring to Fig. 6, in the diffractive lens 1 and the objective lens 2, because the region relatively close to the optical axis X (the position r is close to zero) differs largely from the region relatively far away from the optical axis X in the spherical aberration, a neighborhood of the optical axis X differs largely from a neighborhood of an outer circumference in the focal distance. On the other hand, when only the region relatively close to or far away from the optical axis X of the diffractive lens 1 is seen, a change amount of the spherical aberration decreases with respect to the position r, and the focal distance is substantially kept constant with respect to the position r.

When the region having the different focal distance exists, possibly there is a problem in that the angle characteristic is degraded by an influence of a distribution of the light reflected from the measurement target. Therefore, the light shielding is performed to the central portion of the diffractive lens 1 or the objective lens 2, and the displacement is measured using only the ray passing through the region close to the outer circumference in which the focal distance is substantially kept constant. This enables the degradation of the angle characteristic to be reduced. The reason is described in detail below. Hereinafter, the "diffractive lens" and the "objective lens" are collectively referred to as a "lens".

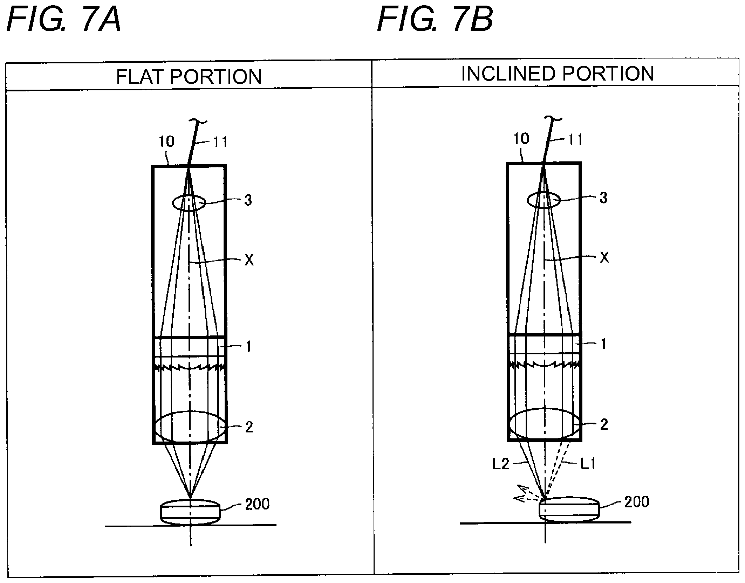

Fig. 7 is a view illustrating a problematic point in measuring the displacement of a configuration in which the light shielding is not performed in the central portion of the lens. Fig. 7A is a view illustrating a locus of the ray in measuring the displacement of a flat portion of the measurement target 200. Fig. 7B is a view illustrating a locus of the ray in measuring the displacement of the inclined portion of the measurement target 200. Referring to Figs. 7A and 7B, in measuring the displacement of the flat portion of the measurement target 200, the light is projected from the whole lens (the central portion and the outer circumference portion) to the measurement target 200, and the whole lens receives the reflected light.

On the other hand, in measuring the displacement of the inclined portion of the measurement target 200, although the light is projected from the whole lens to the measurement target 200, part of the ray projected to the measurement target 200 (in Fig. 7B, a ray L1 indicated by a broken line) cannot return to the objective lens 2 because of the reflection in the inclined portion of the measurement target 200. Accordingly, only the reflected light passing through the outer circumference portion of the lens is received like a ray L2 indicated by a solid line.

The measurement of the displacement in the flat portion of the measurement target 200 differs from the measurement of the displacement in the inclined portion of the measurement target 200 in a light receiving range of the lens.

As illustrated in Fig. 5, the change amount of the aberration increases with increasing value range of the position r. The increase of the amount of change of the aberration means the large variation of the focal distance. That is, the wavelength of the light focused on the surface of the measurement target 200 varies depending on the position where the light passes through the lens. For this reason, when the measurement is performed under a condition that the light receiving range of the lens varies like the flat portion and the inclined portion of the measurement target 200, a measured value of the displacement of the inclined portion differs from the original displacement, and the measurement accuracy of the displacement cannot be enhanced in each place of the measurement target 200.

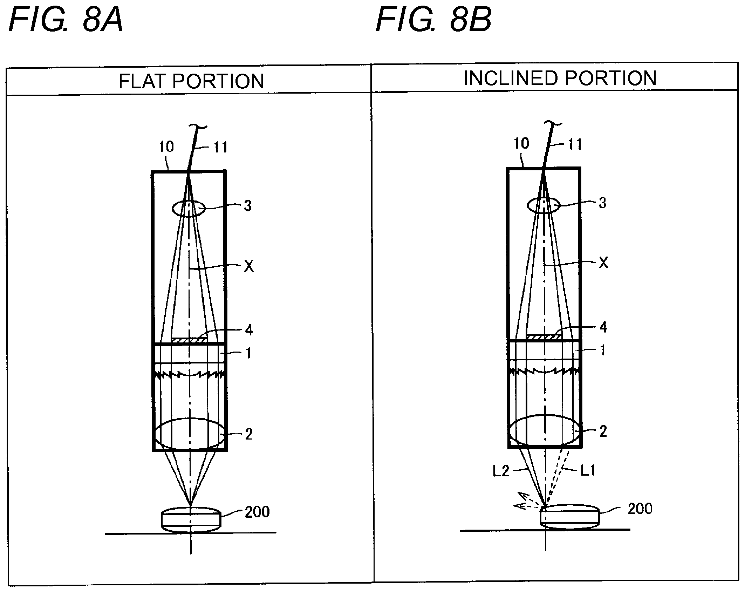

Fig. 8 is a view illustrating the measurement of the displacement in the configuration of the first embodiment. Fig. 8A is a view illustrating the locus of the ray in measuring the displacement of the flat portion of the measurement target 200. Fig. 8B is a view illustrating the locus of the ray in measuring the displacement of the inclined portion of the measurement target 200. Referring to Figs. 8A and 8B, in the first embodiment, the light reflected from the measurement target 200 passes through the outer circumference portion of the lens in the case that both the displacements of the flat portion and the inclined portion of the measurement target 200 are measured using the light shielding film 4. As illustrated in Fig. 5, in the outer circumference portion of the lens, the aberration is substantially homogeneous irrespective of the position r from the optical axis X. According to the first embodiment, both the displacements of the flat portion and the inclined portion of the measurement target 200 can accurately be measured.

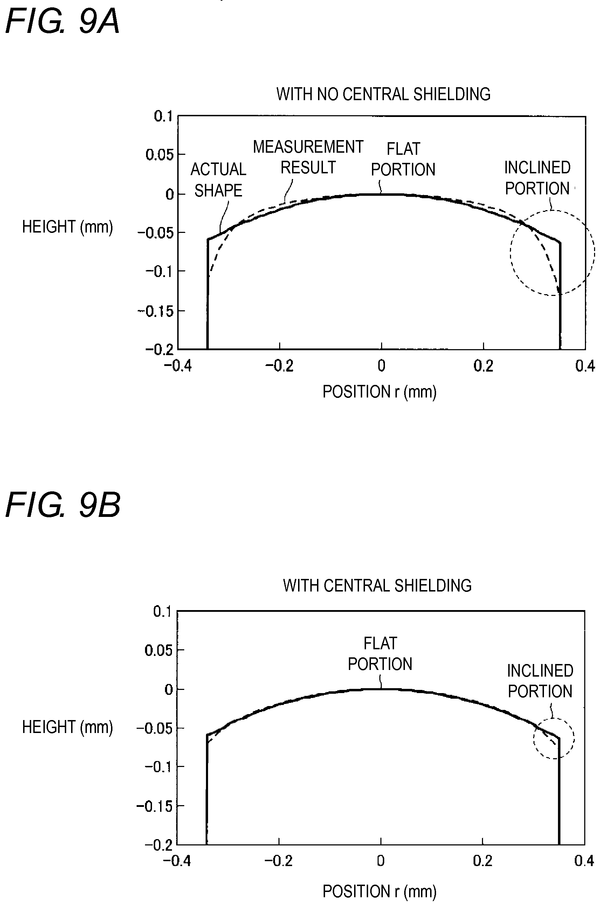

Figs. 9A and 9B are views illustrating improvement of the measurement accuracy by the shielding (central shielding) in the central portion of the diffractive lens. Referring to Fig. 9A, in the case that the central shielding does not exist (corresponding to the configuration in Fig. 7), a large difference between an actual shape and a measurement result is not generated in the flat portion of the measurement target. However, the difference between the actual shape and the measurement result is increased in the inclined portion of the measurement target.

As described above, while the light reflected from the flat portion of the measurement target is received by the whole lens, the light reflected from the inclined portion of the measurement target is received only by the outer circumference portion of the lens. Because the focal distance is short in the outer circumference portion of the lens due to the influence of the aberration, the light having the shorter wavelength is focused on the surface of the measurement target.

With increasing wavelength of the light, the measurement result tends to become larger than the actual height. On the other hand, with decreasing wavelength of the light, the measurement result tends to become smaller than the actual height. Accordingly, the measured height is smaller than the original height in the inclined portion of the measurement target.

On the other hand, referring to Fig. 9B, in the case that the central shielding exists, both the light reflected from the flat portion of the measurement target and the light reflected from the inclined portion of the measurement target pass through the outer circumference portion of the lens. Accordingly, the variation of the aberration can be decreased. As a result, the measured height agrees well with the actual height in both the flat portion and the inclined portion of the measurement target.

According to the configuration, the diffraction surface 1a of the diffractive lens 1 is oriented toward the objective lens 2, and the plane 1 b of the diffractive lens 1 is oriented toward the pin hole (optical fiber 11).

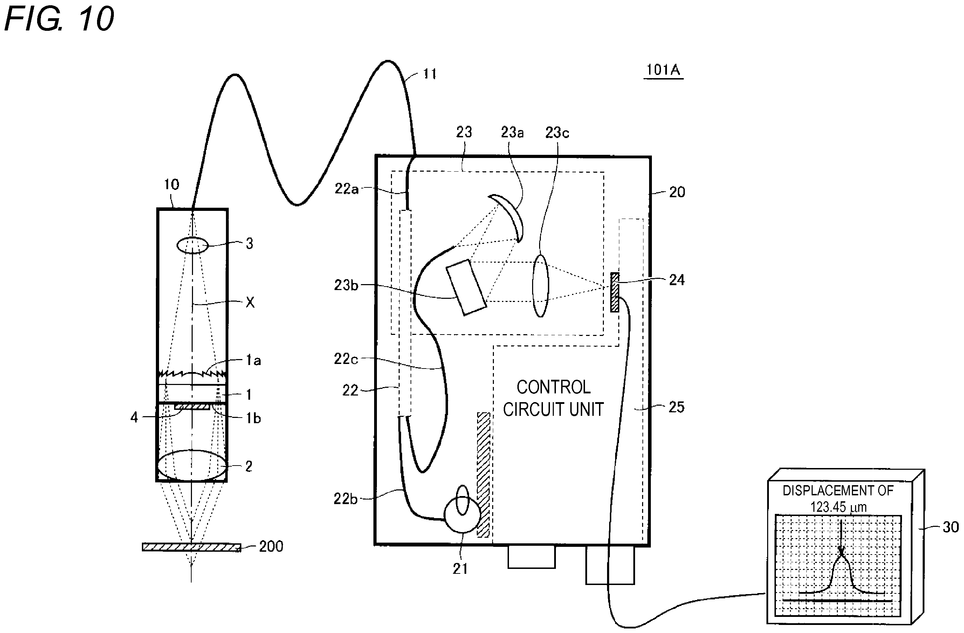

Fig. 10 is a schematic diagram illustrating another not claimed configuration of the confocal measurement apparatus. Referring to Fig. 10, in a confocal measurement apparatus 101 A, the diffraction surface 1a of the diffractive lens 1 is oriented toward the pin hole (optical fiber 11), and the plane 1 b of the diffractive lens 1 is oriented toward the objective lens 2. Compared with the confocal measurement apparatus 101 in Fig. 1, the orientation of the diffractive lens 1 is reversed in the confocal measurement apparatus 101 A. In the confocal measurement apparatus 101A in Fig. 10, the angle characteristic can be enhanced like the confocal measurement apparatus 101 in Fig. 1.

In the confocal measurement apparatus 101 in Fig. 1, the following effect can be obtained by orienting the plane 1 b of the diffractive lens 1 toward the pin hole (optical fiber 11).

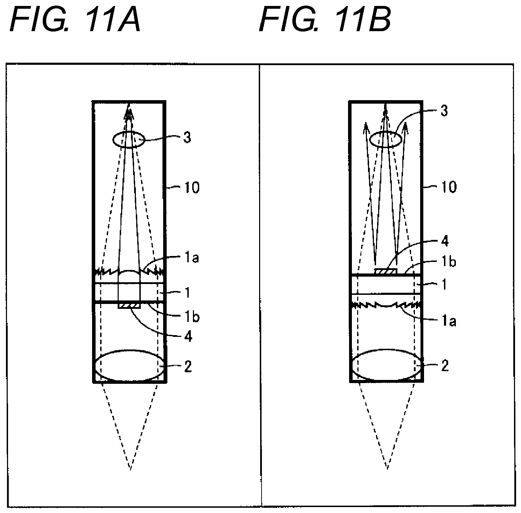

Figs. 11A and 11B are views illustrating comparison of the case that the plane 1 b of the diffractive lens 1 is oriented toward the objective lens 2 and the case that the plane 1 b is oriented toward the pin hole (optical fiber 11). Referring to Fig. 11A, in the case that the plane 1 b of the diffractive lens 1 is oriented toward the objective lens 2, part of the light output from the optical fiber 11 becomes the parallel light in the diffractive lens 1, is reflected from a backside of the light shielding film 4, and is incident to the optical fiber 11.

For example, in the case that the displacement of the measurement target 200 having the low reflectance is measured, because the reflected light incident to the optical fiber 11 has the weak intensity, it is necessary to lengthen an imaging time (exposure time) of the imaging element 24. On the other hand, because the light, which is reflected from the backside of the light shielding film 4 and is incident to the optical fiber 11, has the strong intensity, possibly an output of the imaging element is saturated when the imaging time is lengthened. In order to avoid the saturation of the output of the imaging element, it is conceivable that the imaging time is shortened. However, when the imaging time is shortened, it is difficult to ensure the accurate measurement of the displacement.

As illustrated in Fig. 11B, when the light shielding film 4 is provided on the pin hole (optical fiber 11) side, the light reflected from the light shielding film 4 travels while spreading. Therefore, the reflected light is hardly coupled to the optical fiber. This enables the problem to be avoided. Accordingly, the accurate measurement can be ensured.

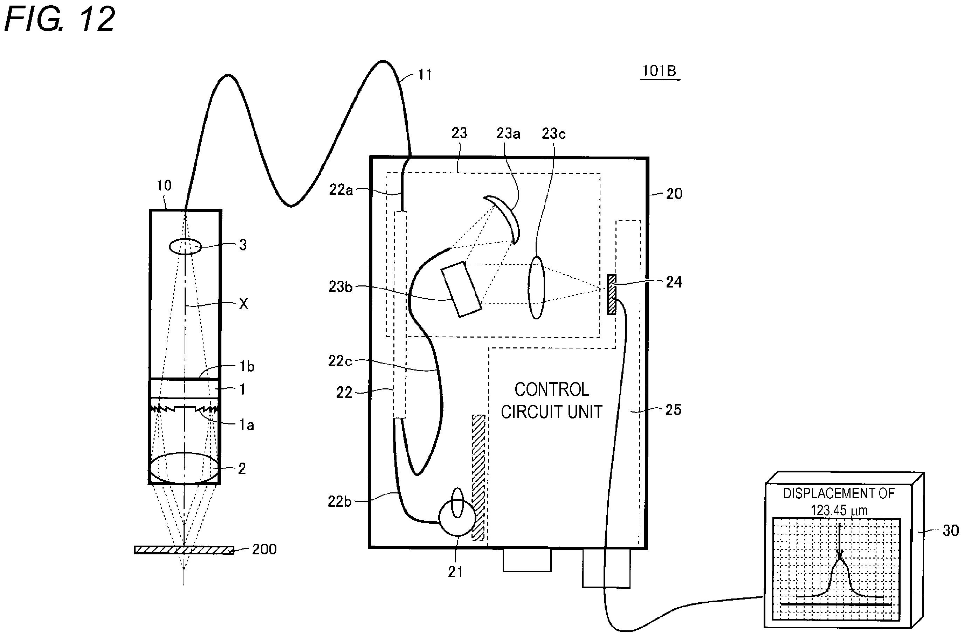

Fig. 12 is a schematic diagram illustrating still another configuration of the confocal measurement apparatus of this embodiment. Referring to Fig. 12, a confocal measurement apparatus 101 B differs from the confocal measurement apparatus 101 in the shape of the diffraction surface 1a of the diffractive lens 1.

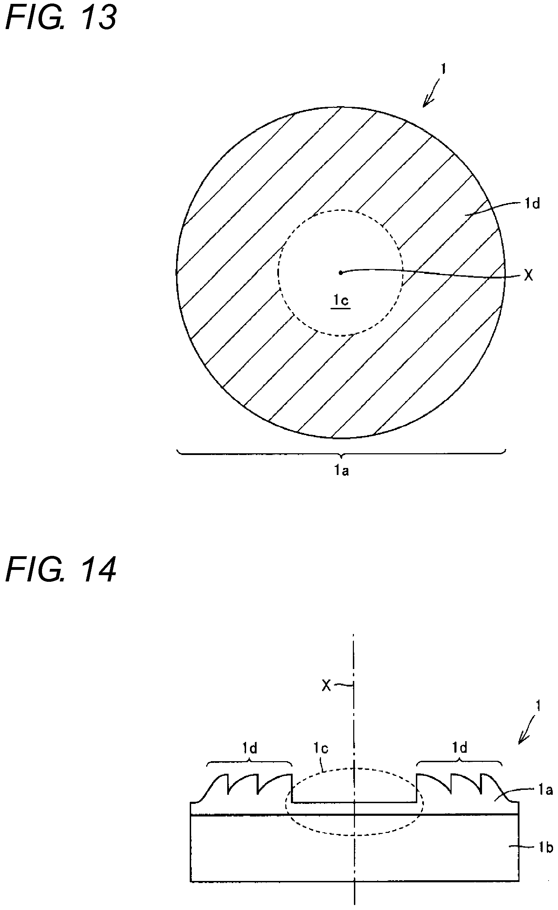

Fig. 13 is a view schematically illustrating the diffraction surface of the diffractive lens 1 in Fig. 12. Fig. 14 is a schematic sectional view of the diffractive lens 1 in Fig. 12. Referring to Figs. 13 and 14, a central portion 1c of the diffraction surface 1 a is formed in the plane, but the diffraction pattern is not formed. Accordingly, in the diffraction surface 1 a, the diffraction pattern is formed in a ring-like region 1 d except the central portion 1 c.

The central portion 1c of the diffraction surface 1 a can be used as the region that does not contribute to the diffraction of the light by forming the central portion 1 c on the plane. Accordingly, the central portion 1c has the same function as the light shielding film 4. That is, the central portion 1 c corresponds to the dimming part that attenuates the reflected light returning to the pin hole. The area of the central portion 1c is determined from the same viewpoint as the area of the light shielding region. Accordingly, the ratio of the area of the central portion 1c to the effective area of the diffractive lens 1 is determined so as to become the range of 10% to 50%, preferably the range of 20% to 40%, and more preferably 30%.

The light shielding film 4 is formed in the central portion (the region located on the opposite side to the central portion 1c of the diffraction surface 1 a) of the plane 1 b of the diffractive lens 1 in Figs. 12 to 14. In order to avoid the returning the light reflected from the light shielding film 4 to the pin hole as much as possible, the diffraction surface 1 a of the diffractive lens 1 is oriented toward the objective lens 2 (that is, the light shielding film 4 is oriented toward the pin hole).

In the first embodiment, the light shielding film 4 is disposed in the central portion of the plane 1 b of the diffractive lens 1. Alternatively, the light shielding film 4 may be replaced with a dimming film that weakens the light intensity. In this case, there is no particular limitation to the transmittance of the dimming film.

As described above, according to the first embodiment, the diffractive lens 1 includes the light shielding region (or the dimming region) that dims the light returning to the pin hole from the central portion around the optical axis X of the diffractive lens 1. Therefore, because the angle characteristic of the confocal measurement apparatus can be enhanced, the measurement accuracy of the displacement can be enhanced.

The measurement accuracy of the displacement can be enhanced by the feature relating to the structure of the diffractive lens 1. The measurement accuracy of the displacement can be enhanced by processing of a light reception signal output from the imaging element.

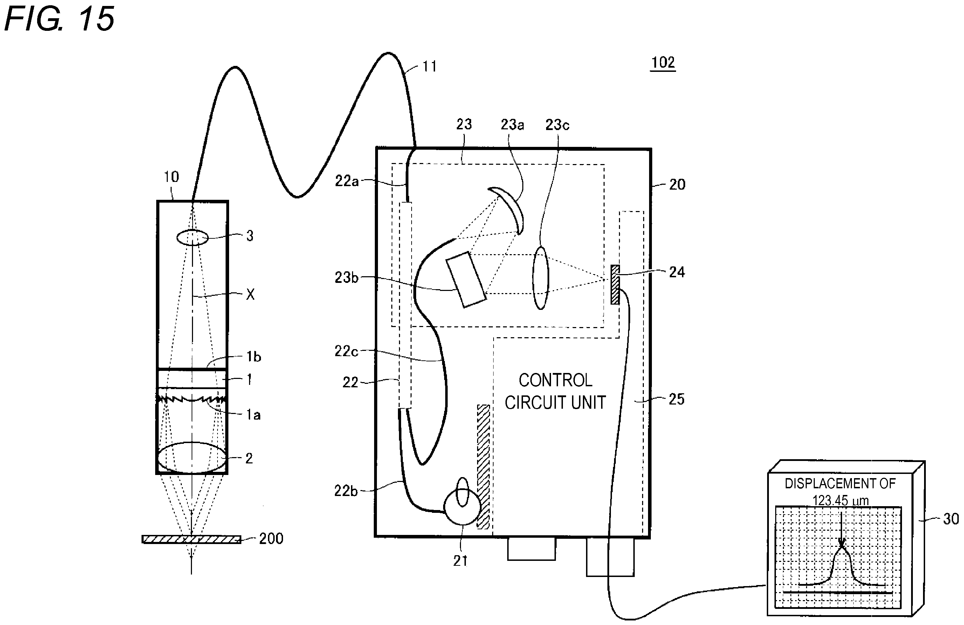

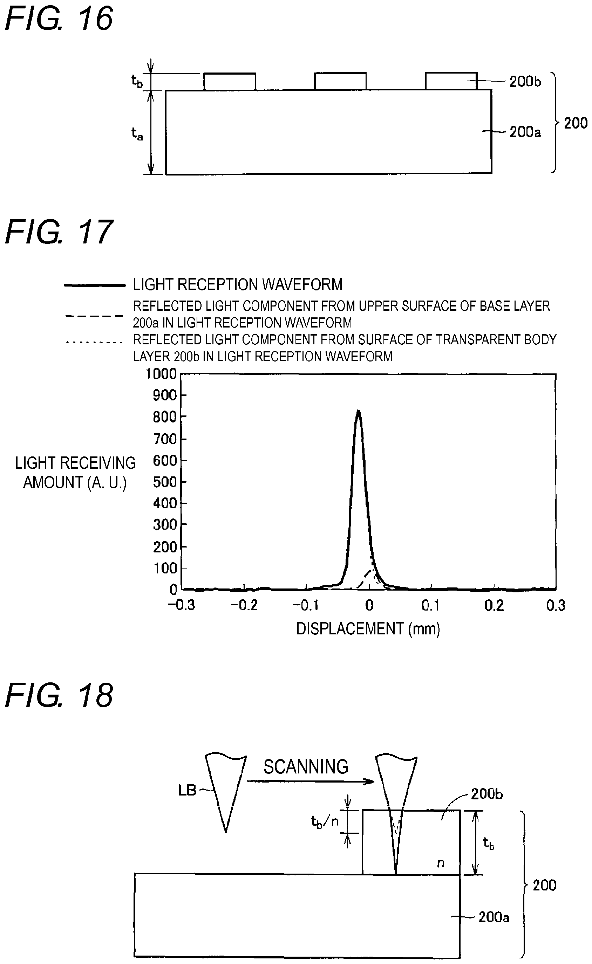

Fig. 15 is a schematic diagram illustrating a configuration of a not claimed confocal measurement apparatus. Fig. 16 is a view illustrating an example of a measurement target 200 measured with a confocal measurement apparatus 102 Referring to Fig. 16, the measurement target 200 includes a base layer 200a and a transparent body layer 200b. The transparent body layer 200b is disposed on the surface of the base layer 200a. The reflectance of the surface (upper surface) of the transparent body layer 200b is smaller than the reflectance of the surface of the base layer 200a. A thickness $t_b$ of the transparent body layer 200b is smaller than the half-value width of a light reception waveform. For example, the base layer 200a is a silicon wafer, and the transparent body layer 200b is a photoresist that is fixed to the surface of the silicon wafer.

Fig. 17 is a waveform chart illustrating the light reception waveform when the transparent body layer in Fig. 16 is measured. Referring to Fig. 17, the amount of light reflected from the surface of the base layer 200a (silicon wafer) is much larger than the amount of light reflected from the upper surface of the transparent body layer 200b (photoresist). As described above, the thickness $t_b$ of the transparent body layer 200b is smaller than the half-value width of a light reception waveform. Therefore, the light reception waveform of the light reflected from the transparent body layer 200b is buried in the light reception waveform of the light reflected from the surface of the base layer 200a.

Fig. 18 is a view illustrating a method for measuring the thickness of the transparent body layer 200b in Fig. 17. Referring to Fig. 18, scanning light LB from the objective lens 2 (not illustrated) is incident to the transparent body layer 200b. The transparent body layer 200b has the thickness $t_b$ and a refractive index n.

The light LB passes through air while the height of the base layer 200a (silicon wafer) is measured. On the other hand, when the base layer 200a is measured while the transparent body layer 200b transmits the light, the transparent body layer seems to have the thickness 1/n times the original thickness $t_b$ due to the refraction of the light in the transparent body layer. That is, the height of the base layer 200a seems to be higher than the surface of the base layer 200a by the height of the following equation.

$$t_b - t_b/n = (1 - 1/n)t_b$$

For the scanning light LB, the height of $(1 - 1/n)t_b$ is measured. Assuming that h is the measured height, the thickness $t_b$ is calculated by the following equation.

$$t_b = h \times n/(n - 1)$$

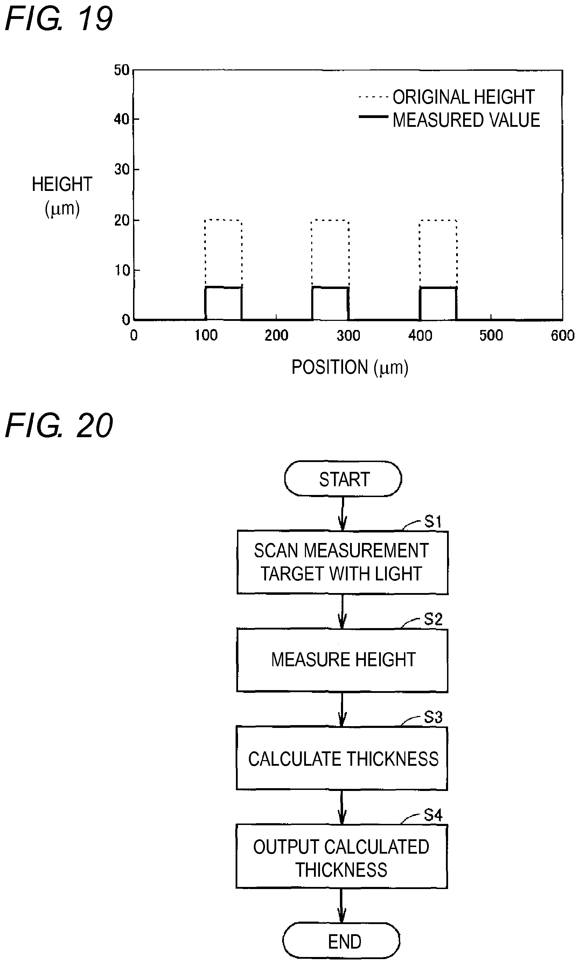

Fig. 19 is a view illustrating a relationship between the original height and the measured height. Because the refractive index n is larger than 1, the original height (thickness $t_b$) is larger than the measured value h.

The refractive index n of the transparent body layer 200b is previously obtained. The thickness $t_b$ is obtained from the measured height h by the equation.

Fig. 20 is a flowchart illustrating measurement processing performed by the confocal measurement apparatus of Fig. 15. Referring to Fig. 20, when the processing is started, the measurement target is scanned with the light in Step S1. Although not illustrated in Fig. 15, for example, a stage on which the measurement target 200 is placed moves to scan the measurement target with the light output from the head part 10.

The height h of the transparent body layer 200b is measured in Step S2. Like the first embodiment, the imaging element 24 receives the light returning from the head part 10. The control circuit unit 25 analyzes the peak wavelength of the spectral waveform of the signal output from the imaging element 24. The control circuit unit 25 determines the height h from the peak wavelength.

In Step S3, the control circuit unit 25 calculates the thickness $t_b$ of the transparent body layer 200b. Specifically, the control circuit unit 25 calculates the thickness $t_b$ from the height h determined in Step S2 using the equation of $t_b = h \times n/(n - 1)$. The refractive index n is previously stored in the control circuit unit 25 while correlated with a type of the transparent body layer 200b. For example, during the measurement, a user assigns the type of the transparent body layer 200b in the control circuit unit 25. Therefore, the control circuit unit 25 automatically determines the refractive index n.

In Step S4, the control circuit unit 25 outputs the calculated thickness $t_b$. For example, the control circuit unit 25 outputs the value of the thickness $t_b$ to the monitor 30. The monitor 30 displays the value of the thickness $t_b$.

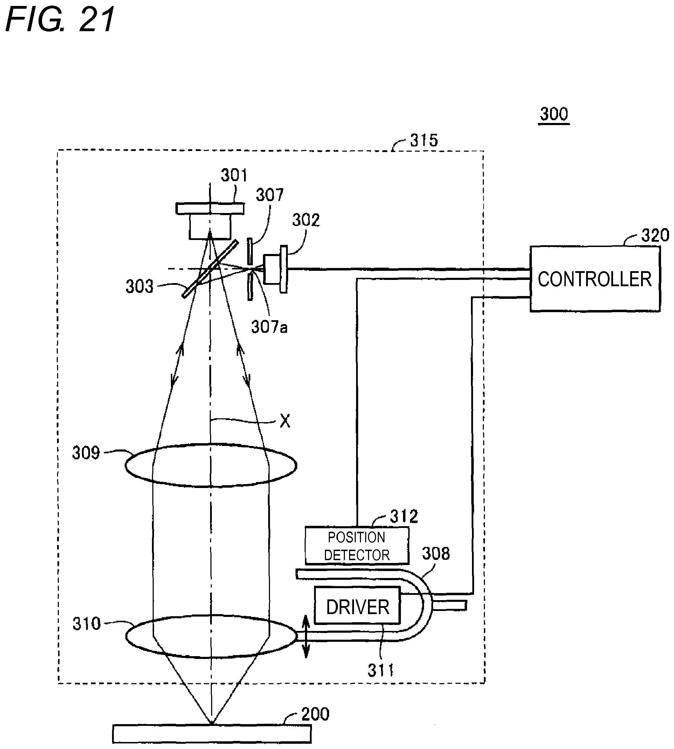

Fig. 21 is a view illustrating another not claimed configuration of a confocal measurement apparatus Referring to Fig. 21, a confocal measurement apparatus 300 includes a sensor head 315 and a controller 320 that controls the sensor head 315.

The sensor head 315 includes a laser diode 301, a photodiode 302, a beam splitter 303, a diaphragm plate 307 in which a pin hole 307a is formed, a collimator lens 309, a tuning fork vibrator 308, an objective lens 310 that is attached to an arm of the vibrator 308, a driver 311 that vibrates the vibrator 308, and a position detector 312 that detects the position of an arm of the vibrator 308.

The laser diode 301 emits the light having a constant intensity by supplying a current from the controller 320. The light emitted from the laser diode 301 is transmitted through the beam splitter 303, and is incident to the collimator lens 309. The light emitted from the laser diode 301 is collimated by the collimator lens 309, and is incident to the objective lens 310. The objective lens 310 collects the light from the collimator lens 309 to the surface of the measurement target 200.

The objective lens 310 is supported by the arm of the vibrator 308. The driver 311 is provided near the vibrator 308 in order to vibrate the arm of the vibrator 308. The objective lens 310 moves in a direction in which the objective lens 310 comes close to the measurement target 200 and a direction in which the objective lens 310 recedes from the measurement target 200 by the vibration of the arm of the vibrator 308. The position detector 312 detects the position of the objective lens 310 along the direction of the optical axis X.

The light emitted from the laser diode 301 toward the measurement target 200 is reflected by the measurement target 200. The light reflected from the measurement target 200 is guided to the photodiode 302 through the objective lens 310, the collimator lens 309, and the beam splitter 303. The reflected light guided to the photodiode 302 by the beam splitter 303 is incident to the photodiode 302 through the pin hole 307a of the diaphragm plate 307.

The controller 320 transmits a signal to the driver 311 to control an operation of the driver 311. The controller 320 correlates the displacement amount of the objective lens 310 with the intensity of the light reception signal based on the signal from the position detector 312 and the light reception signal from the photodiode 302. Therefore, the controller 320 detects the displacement amount of the objective lens 310 when the intensity of the light reception signal reaches the peak. Based on the displacement amount, the controller 320 measures the displacement of the surface of the measurement target 200.

In the confocal measurement apparatus having the configuration, the controller 320 can perform the measurement processing in Fig. 20. Accordingly, the thickness of the transparent body layer provided on the base layer can be measured.

Figs. 15 and 21 illustrate not claimed confocal type displacement measurement apparatus. However, the measurement processing can also be performed with what is called a triangulation type displacement measurement apparatus.

The summary of these not claimed examples is as follows. The measurement apparatus includes the light source (21,302) that emits the light, the objective lens (2, 310) that collects the light emitted from the light source (21, 302) to the measurement target (200), the light receiving element (24, 302) that receives the light reflected from the measurement target (200), and calculation part (25, 320) that calculates the displacement of the measurement target (200) based on the light reception signal output from the light receiving element (24, 302). The measurement target (200) includes the base layer (200a) and the transparent body layer (200b) that is disposed on the base layer (200a). The calculation part (25, 320) measures the height (h) of the transparent body layer (200b) based on the light reception signal output from the light receiving element (24, 302). The calculation part (25, 320) calculates the thickness ($t_b$) of the transparent body layer (200b) based on the measured height (h) and the refractive index (n) of the transparent body layer (200b). In other words, the calculation part (25, 320) corrects the measured height (h) using the refractive index (n) of the transparent body layer (200b), and determines the thickness ($t_b$) of the transparent body layer (200b). As described above, the displacement measurement method performed by the measurement apparatus includes the confocal method and the triangulation method. However, generally, a displacement measurement method is not limited to the confocal method and the triangulation method.

Preferably the measurement apparatus is the confocal measurement apparatus that measures the displacement of the measurement target using the confocal optical system. The measurement apparatus includes the pin hole (11, 307) that allows the passage of the light focused on the measurement target (200) in the light collected by the objective lens (2, 310).

More preferably the light source (21) is the light source that emits the light having the plural wavelengths. The measurement apparatus includes the diffractive lens (1) that generates the chromatic aberration along the direction of the optical axis (X) in the light emitted from the light source (21).

The displacement measurement method described here as a not claimed example is the displacement measurement method in which the measurement apparatus measuring the displacement of the measurement target is used. The measurement target (200) includes the base layer (200a) and the transparent body layer (200b) that is disposed on the base layer (200a). The measurement apparatus includes the light source (21, 302) that emits the light, the objective lens (2, 310) that collects the light emitted from the light source (21, 302) to the measurement target (200), the light receiving element (24, 302) that receives the light reflected from the measurement target (200), and calculation part (25,320) that calculates the displacement of the measurement target (200) based on the light reception signal output from the light receiving element (24,302).

The measurement method includes the step (S1) of scanning the surface of the measurement target (200) with the light emitted from the light source (21, 302) to the measurement target (200), the step (S2) of measuring the height (h) of the transparent body layer (200b) based on the light reception signal output from the light receiving element (24,302), the step (S3) of calculating the thickness ($t_b$) of the transparent body layer (200b) based on the measured height (h) and the refractive index (n) of the transparent body layer (200b).

INDEX TO THE REFERENCE NUMERALS

1 ... diffractive lens; 1 a ... diffraction surface; 1b ... plane; 1c ... central portion; 1 d ... ring-like region; 2 ... objective lens; 3 ... collective lens; 4 ... light-shielding film; 10 ... head part; 11, 22a-22c ... optical fiber; 20 ... controller; 21 ... white LED; 22 ... branching optical fiber; 23 ... spectroscope; 23a ...concave mirror; 23b ... diffraction grating; 23c ... collective lens; 24 ... imaging element; 25 ... control circuit unit; 30 ... monitor; 101, 101A, 101B, 102, 300 ... confocal measurement apparatus; 200 ... measurement target; 200a ... base layer; 200b ... transparent body layer; 301 ... laser diode; 302 ... photodiode; 303 ... beam splitter; 307 ...diaphragm plate; 307a ... pin hole; 308 ... vibrator; 309 ... collimator lens; 310 ... objective lens; 311 ... driver; 312 ... position detector; 315 ... sensor head; 320 ... controller; S ... region; X ... optical axis;

**Claims**

1.   A confocal measurement apparatus (101, 101 A, 101B) configured to measure a displacement of a measurement target (200) using a confocal optical system, the confocal measurement apparatus (101) comprising:

a light source (21) that emits light having a plurality of wavelengths;
a diffractive lens (1) that includes a diffraction surface (1a) and a plane (1b) to generate a chromatic aberration along an optical axis (X) direction in the light emitted from the light source (21), a diffraction pattern being formed in the diffraction surface (1a) to generate the chromatic aberration, the plane (1 b) being located on an opposite side to the diffraction surface;
an objective lens (2) that collects the light on the measurement target (200), the light having the chromatic aberration generated by the diffractive lens (1), the objective lens (2) being disposed on a measurement target side with respect to the diffractive lens (1);
a pin hole that allows passage of that part of the light collected by the objective lens (2) that is in focus on the measurement target (200); and
a measurement part (20) that measures an intensity of the light passed through the pin hole in each wavelength, wherein the diffractive lens (1) includes a dimming part (4) having an axis-symmetrical shape about an optical axis of the diffractive lens,
wherein the plane (1b) of the diffractive lens (1) in which the dimming part (4) is formed is oriented toward the pin hole, and
the diffraction surface (1 a) of the diffractive lens (1) is oriented toward the objective lens (2).

2.   The confocal measurement apparatus according to claim 1, wherein the dimming part (4) includes a light shielding film formed in the plane (1 b) of the diffractive lens (1).

3.   The confocal measurement apparatus according to any one of claims 1 to 2, wherein the dimming part (4) is constructed by a paint fixed to the plane (1 b) of the diffractive lens (1).

4.   The confocal measurement apparatus according to any one of claims 1 to 2, wherein the dimming part (4) is constructed by a metallic film fixed to the plane (1b) of the diffractive lens (1).

5.   The confocal measurement apparatus according to any one of claims 1 to 4, wherein an area of the dimming part (4) falls within a range of 10% to 50% of an effective area of the diffractive lens (1).

**Patentansprüche**

1.   Konfokale Messvorrichtung (101, 101a, 101b), die eingerichtet ist, eine Verschiebung eines Messungsziels (200) zu messen, wobei ein konfokales optisches System verwendet wird, wobei die konfokale Messvorrichtung (101) aufweist:

eine Lichtquelle (21), welche Licht emittiert, das mehrere Wellenlängen aufweist;
eine beugende Linse (1), welche eine beugende Oberfläche (1a) und eine Ebene (1b) umfasst, um eine chromatische Aberration entlang einer Richtung einer optischen Achse (x) in dem von der Lichtquelle (21) emittierten Licht zu erzeugen, wobei ein Beugungsmuster auf der beugende Oberfläche (1a) gebildet ist, um die chromatische Aberration zu erzeugen, wobei sich die Ebene (1b) auf einer Seite gegenüber der beugenden Oberfläche befindet;

eine Objektivlinse (2), welche das Licht auf dem Messungsziel (200) sammelt, wobei das Licht die durch die beugende Linse (1) erzeugte chromatische Aberration aufweist, wobei die Objektivlinse (2) auf einer Seite des Messungsziels bezogen auf die beugende Linse (1) angeordnet ist;

ein Pinhole, welches den Durchgang jenes Teils des Lichts erlaubt, der durch die Objektivlinse (2) gesammelt wird, die in einem Fokus auf dem Messungsziel (200) ist; und

ein Messabschnitt (20), welcher eine Intensität des Lichts misst, das bei jeder Wellenlänge durch das Pinhole hindurchgeht,

wobei die beugende Linse (1) einen Abblendabschnitt (4) umfasst, der eine achsensymmetrische Form um eine optische Achse der beugenden Linse aufweist,

wobei die Ebene (1b) der beugenden Linse (1), in welcher der Abblendabschnitt (4) gebildet ist, in Richtung des Pinholes orientiert ist, und

wobei die beugende Oberfläche (1a) der beugenden Linse (1) in Richtung der Objektivlinse (2) orientiert ist.

2. Konfokale Messvorrichtung gemäß Anspruch 1, wobei der Abblendabschnitt (4) eine Lichtabschirmungsschicht umfasst, die in der Ebene (1b) der beugenden Linse (1) gebildet ist.

3. Konfokale Messvorrichtung gemäß einem der Ansprüche 1 bis 2, wobei der Abblendabschnitt (4) durch eine Farbe gebildet ist, die auf der Ebene (1b) der beugenden Linse (1) angebracht ist.

4. Konfokale Messvorrichtung gemäß einem der Ansprüche 1 bis 2, wobei der Abblendabschnitt (4) durch eine metallische Schicht gebildet ist, die auf der Ebene (1b) der beugenden Linse (1) angebracht ist.

5. Konfokale Messvorrichtung gemäß einem der Ansprüche 1 bis 4, wobei eine Fläche des Abblendabschnitts (4) innerhalb eines Bereiches von 10% bis 50% einer effektiven Fläche der beugenden Linse (1) liegt.

**Revendications**

1. Appareil de mesure confocale (101, 101A, 101B) conçu pour mesurer un déplacement de cible de mesure (200) à l'aide d'un système optique confocal, l'appareil de mesure confocale (101) comprenant :

une source de lumière (21) qui émet une lumière ayant une pluralité de longueurs d'onde ;

une lentille diffractive (1) qui présente une surface de diffraction (1a) et un plan (1b) pour engendrer une aberration chromatique le long d'une direction d'axe optique (X), dans la lumière émise depuis la source de lumière (21), une figure de diffraction étant formée sur la surface de diffraction (1a) pour engendrer l'aberration chromatique, le plan (1b) se situant d'un côté opposé à la surface de diffraction ;

une lentille d'objectif (2) qui collecte la lumière sur la cible de mesure (200), la lumière ayant l'aberration chromatique engendrée par la lentille diffractive (1), la lentille d'objectif (2) étant disposée d'un côté cible de mesure par rapport à la lentille diffractive (1) ;

un sténopé qui permet le passage de la partie de la lumière collectée par la lentille d'objectif (2) qui est focalisée sur la cible de mesure (200) ; et

une partie de mesure (20) qui mesure une intensité de la lumière ayant traversé le sténopé dans chaque longueur d'onde,

dans lequel la lentille diffractive (1) comporte une partie de gradation (4) ayant une forme axisymétrique par rapport à un axe optique de la lentille diffractive,

dans lequel le plan (1b) de la lentille diffractive (1) dans lequel est formée la partie de gradation (4) est orienté vers le sténopé, et

la surface de diffraction (1a) de la lentille diffractive (1) est orientée vers la lentille d'objectif (2).

2. Appareil de mesure confocale selon la revendication 1, dans lequel la partie de gradation (4) comporte un film de protection contre la lumière, formé dans le plan (1b) de la lentille diffractive (1).

3. Appareil de mesure confocale selon l'une quelconque des revendications 1 et 2, dans lequel la partie de gradation (4) est constituée d'une peinture fixée dans le plan (1b) de la lentille diffractive (1).

**4.** Appareil de mesure confocale selon l'une quelconque des revendications 1 et 2, dans lequel la partie de gradation (4) est constituée d'un film métallique fixé dans le plan (1b) de la lentille diffractive (1).

**5.** Appareil de mesure confocale selon l'une quelconque des revendications 1 à 4, dans lequel une aire de la partie de gradation (4) se situe à l'intérieur d'une plage de 10 % à 50 % d'une section efficace de la lentille diffractive (1).

FIG. 1

EP 2 708 934 B1

*FIG. 2*

LIGHT
INTENSITY

WORKPIECE HEIGHT (mm)

*FIG. 3*

*FIG. 4*

*FIG. 5*

FIG. 6

FIG. 7A — FLAT PORTION

FIG. 7B — INCLINED PORTION

EP 2 708 934 B1

FIG. 8A — FLAT PORTION

FIG. 8B — INCLINED PORTION

## FIG. 9A

WITH NO CENTRAL SHIELDING

## FIG. 9B

WITH CENTRAL SHIELDING

FIG. 10

EP 2 708 934 B1

## FIG. 11A

## FIG. 11B

*FIG. 12*

DISPLACEMENT OF
123.45 μm

CONTROL
CIRCUIT UNIT

## FIG. 13

## FIG. 14

## FIG. 15

EP 2 708 934 B1

## FIG. 16

## FIG. 17

——— LIGHT RECEPTION WAVEFORM

– – – – REFLECTED LIGHT COMPONENT FROM UPPER SURFACE OF BASE LAYER 200a IN LIGHT RECEPTION WAVEFORM

········· REFLECTED LIGHT COMPONENT FROM SURFACE OF TRANSPARENT BODY LAYER 200b IN LIGHT RECEPTION WAVEFORM

## FIG. 18

## FIG. 19

HEIGHT (μm) vs POSITION (μm)

·······ORIGINAL HEIGHT
——MEASURED VALUE

## FIG. 20

START

↓

SCAN MEASUREMENT
TARGET WITH LIGHT — S1

↓

MEASURE HEIGHT — S2

↓

CALCULATE THICKNESS — S3

↓

OUTPUT CALCULATED
THICKNESS — S4

↓

END

# FIG. 21

300

315

301
307
302
303
307a

CONTROLLER 320

X

309

310

POSITION DETECTOR 312

308

DRIVER

311

200

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5785651 A
- DE 10321885 A1

- EP 2388635 A1

**Non-patent literature cited in the description**

- **W. LYDA ; D. FLEISCHLE ; T. HAIST ; W. OSTEN.** Chromatic Confocal Spectral Interferometry for Technical Surface Characterization. *Proc. of SPIE,* vol. 7432